# EUROPEAN PATENT SPECIFICATION

(11) **EP 1 950 941 B1**
(45) Date of publication and mention of the grant of the patent: **25.02.2009**
(21) Application number: 07101276.9
(22) Date of filing: 26.01.2007
(51) Int. Cl.: H04M 1/725

(54) **System and method for previewing themes**
System und Verfahren zur Voransicht von Themen
Système et procédé de prévisualisation de thèmes

(43) Date of publication of application: 30.07.2008
(60) Divisional application: 09150142.9
(73) Proprietor: Research In Motion Limited, Waterloo, Ontario N2L 3W8 (CA)
(72) Inventor: Lee, Matthew R., Belleville, Ontario K8N 4Z6 (CA); Scott, Sherryl Lee Lorraine, Toronto, Ontario M5T 1Y4 (CA); Paas, Julian, Mississauga, Ontario L5H 3L2 (CA)
(74) Representative: Rickard, David John

(56) References cited:
- EP-A- 1 564 965
- WO-A-20/05039160
- US-A1- 2002 055 373
- US-A1- 2006 173 911

## Description

The following relates generally to themes for a mobile device and in particular to systems and methods for previewing themes.

Users of mobile devices may wish to customize and/or personalize their mobile device. One way to personalize a mobile device is to use a theme, which defines the general look and feel of a mobile device's user interface (UI). A theme may include colour schemes for menus and highlights, background images and, in more sophisticated themes, specific user and folder icons. Changing a theme only affects the look and feel of the UI and does not affect the functions or features of the mobile device.

A mobile device may be capable of storing-multiple themes in memory so that the user can choose between more than one alternative theme to vary the appearance of the mobile device UI. Often when the user chooses a theme, the theme is loaded and the home screen accessed in order to see how the theme actually appears on the mobile device. If the user is not certain of a particular theme and wishes to try more than one theme, this process is then repeated for each variation that is chosen by the user, which can be time consuming.

Other themes may exist that are not stored on the mobile device but are downloadable. To download additional themes, typically a website or carrier site is accessed. When a user is interested in downloading an additional theme, the user may go through all of the steps to access the website and view the various themes available, only to then decide that they do not want to actually download any of the additional themes. They may then proceed to instead load a theme already stored on the mobile device, which can also be time consuming.

EP1564965 discloses a wireless device having navigation window for selecting a game from a list of games on the device. A user can scroll through the list and select an icon for the game and other details are displayed.

WO2005/039160 discloses a wireless device in which a theme profile associated with the device contains data pertaining to which theme to apply to the device and when to transition to another theme as well as where theme content data is located. The device then waits for a triggering event to occur. When such a triggering event occurs, it causes a transition from the currently active theme to another theme.

US2006/173911 discloses a mobile device having a themes folder available to a user of the device to browse multi-media messages containing themes downloaded to the mobile device and to apply a selected theme to the mobile device. The user is therefore able to view already downloaded themes stored on the mobile device.

In general, a problem with the above described methods is that significant time can be consumed selecting and activating several themes before finding a desired one. Where themes need to be downloaded prior to activating, additional time may be consumed. Another problem is that additional bandwidth may be consumed each time a user accesses and/or downloads a theme from a website or carrier site in order to find a desired theme. Where a cost is associated with accessing the website or carrier site, the problem may be of even greater concern to the user.

It is therefore an object of the following to obviate or mitigate at least one of the above disadvantages.

### GENERAL

The following may provide a method and mobile device for previewing a theme for a mobile device. Themes may be previewed by displaying on a display for the mobile device, a first list of themes currently stored on the mobile device, and a second list of themes available for download to said device but which are not yet, i.e. not currently, stored on said device; and upon receiving an first input selecting a desired theme from either the first list or second list, displaying an image on the display, where the image comprises a predefined representation of the appearance of the desired theme.

The following may also provide a method and system for updating a list of theme preview files used to preview themes for a mobile device. A poll list is obtained, which combines a first list of themes currently stored on the mobile device and a second list of theme available for download. The poll list is compared with all themes currently available, and if the poll list does not include at least one of the themes currently available, an update file is prepared comprising one or more images representative of new themes available to be downloaded, and the update file is provided to the mobile device for updating the second list.

### BRIEF DESCRIPTION OF THE DRAWINGS

Embodiments will now be described by way of example only with reference to the appended drawings wherein:

Figure 1 is a system diagram showing the redirection of user data items from a user's desktop PC (host system) to the user's mobile device, where the redirector software is operating at the user's desktop PC.

Figure 2 is a system diagram showing the redirection of user data items from a network server (host system) to the user's mobile device, where the redirector software is operating at the server.

Figure 3 is a block diagram showing the interaction of the redirector software with other components of the host system in Figure 1 (the user's desktop PC) to enable the pushing of information from the host system to the user's mobile device.

Figure 4 is a flow chart showing the steps carried out by the redirector software operating at the host system.

Figure 5 is a flow chart showing the steps carried out by the mobile device to interface with the redirector software operating at the host system.

Figure 6 is a schematic diagram of a mobile device and a display screen therefor.

Figure 7 is a schematic diagram of another mobile device and a display screen therefor.

Figure 8 is a schematic block diagram of components of the mobile device of any or both of Figures 1 and 2.

Figure 9 is a schematic block diagram of the memory shown in Figure 8.

Figure 10 is a screen shot of a display of a mobile device illustrating a theme.

Figure 11 is a screen shot which is loaded and displayed upon selecting an options icon from the screen shown in Figure 10.

Figure 12 is a screen shot which is loaded and displayed upon selecting a theme option from the screen shown in Figure 11 showing a theme preview.

Figure 13 is the screen shot of Figure 12 showing another theme preview.

Figure 14 is another embodiment of a screen shot which is loaded and displayed upon selecting the theme option from the screen shown in Figure 11 that enables previewing of downloadable themes.

Figure 15 is a schematic block diagram of a system for enabling the transmission of theme files onto the mobile device of Figures 6 and 7.

Figure 16 is a screen shot of a web-based program for obtaining themes for a mobile device from a desktop computer.

Figure 17 is a screen shot of a user interface (UI) for a theme builder program.

Figure 18 is a screen shot of another screen displaying a theme preview comprising a list of themes available for download that can be previewed on the same screen.

Figure 19 is a flow chart illustrating the steps performed in polling a theme preview service for providing theme preview files to update the list of themes available shown in Figure 18.

### DESCRIPTION OF PREFERRED EMBODIMENTS

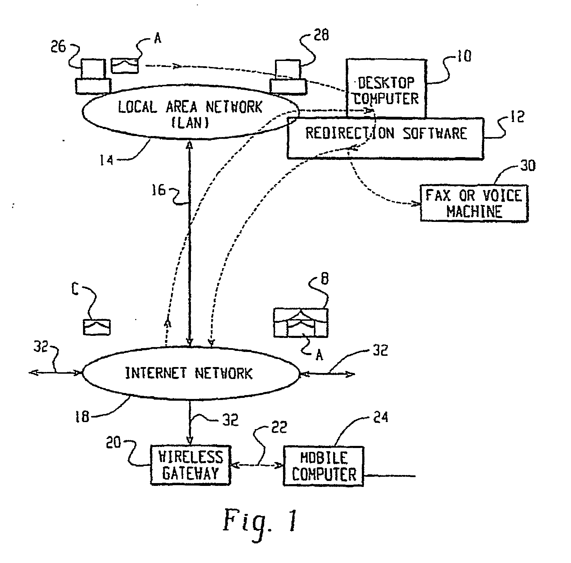

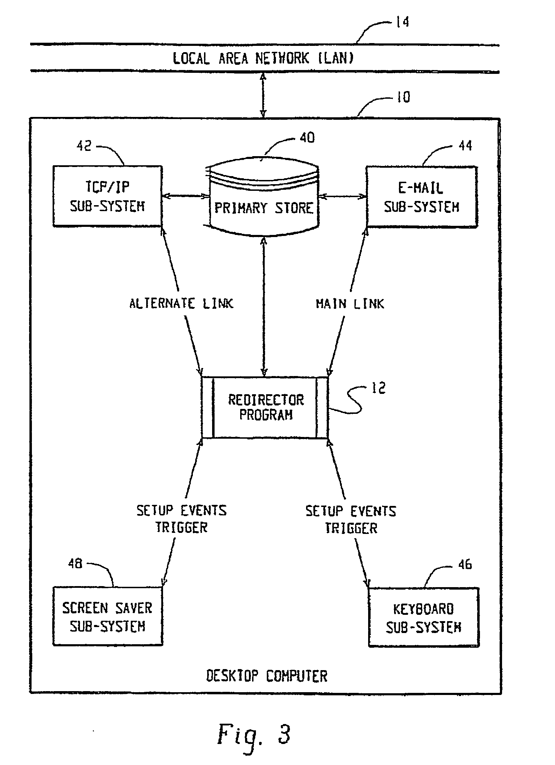

Referring now to the drawings, Figure 1 is an exemplary system diagram showing the redirection of user data items (such as message A or C) from a user's office PC (host system) 10 to the user's mobile device 24, where the redirector software 12 is operating at the user's PC. Message A in Figure 1 represents an internal message sent from desktop 26 to the user's host system 10 via LAN 14. Message C in Figure 1 represents an external message from a sender that is not directly connected to LAN 14, such as the user's mobile device 24, some other user's mobile device (not shown), or any user connected to the Internet 18. Message C also represents a command message from the user's mobile device 24 to the host system 10. As described in more detail in Figure 3, the host system 10 preferably includes, along with the typical hardware and software associated with a workstation or desktop computer, the redirector program 12, a TCP/IP subsystem 42, a primary message store 40, an E-mail subsystem 44, a screen saver subsystem 48, and a keyboard subsystem 46.

In Figure 1, the host system 10 is the user's desktop system, typically located in the user's office. The host system 10 is connected to a LAN 14, which also connects to other computers 26, 28 that may be in the user's office or elsewhere. The LAN 14, in turn, is connected to a wide area network ("WAN") 18, preferably the Internet, which is defined by the use of the Transmission Control Protocol/Internet Protocol ("TCP/IP") to exchange information, but which, alternatively could be any other type of WAN. The connection of the LAN 14 to the WAN 18 is via high bandwidth link 16, typically a T1 or T3 connection. The WAN 18 in turn is connected to a variety of gateways 20, via connections 32. A gateway forms a connection or bridge between the WAN 18 and some other type of network, such as an RF wireless network, cellular network, satellite network, or other synchronous or asynchronous land-line connection.

In one embodiment, mobile device 24 is a hand-held two-way wireless paging computer, a wirelessly enabled palm-top computer, a mobile telephone with data messaging capabilities, or a wirelessly enabled laptop computer, but could, alternatively be other types of mobile devices capable of sending and receiving messages via a network connection 22. Mobile devices 24 could alternatively not be capable of sending and receiving message via network connection 22. In another embodiment, mobile device 24 is a digital entertainment device, such as an MP3 player or video game device. In yet another embodiment, mobile device 24 is any electronic device which can be used by a user to provide a variety of features through a visual display.

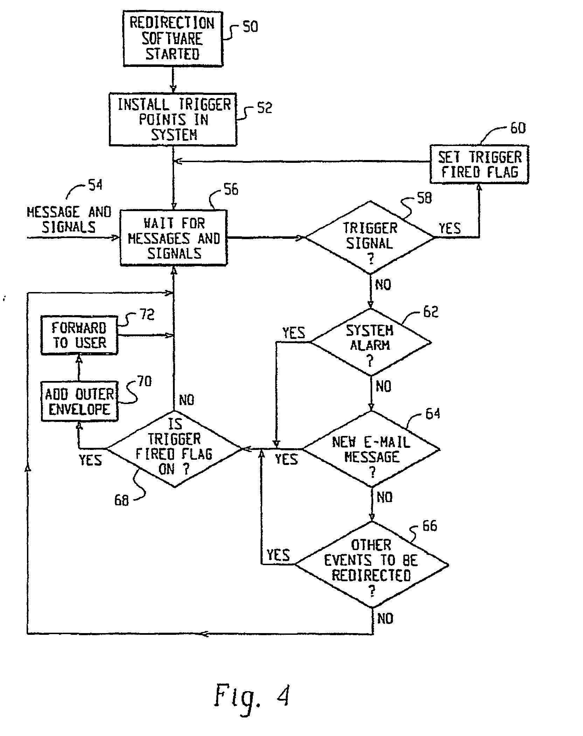

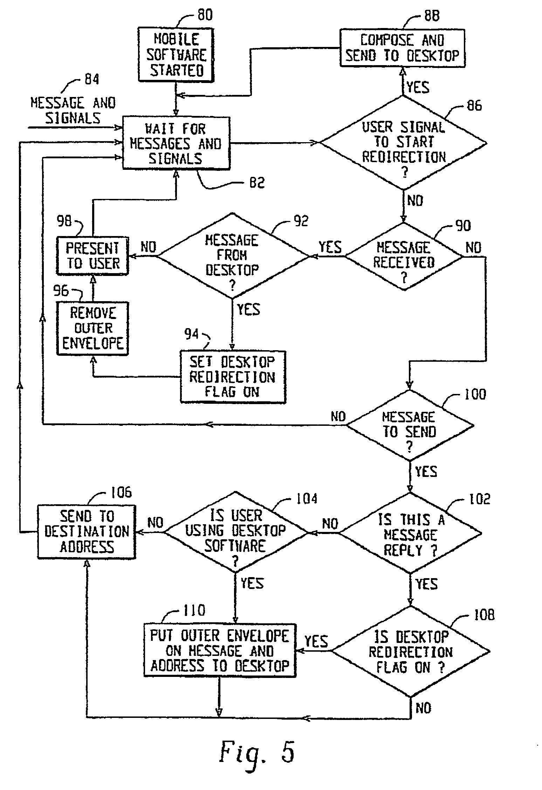

In some embodiments, the mobile device 24 includes software program instructions that work in conjunction with the redirector program 12 to enable the seamless, transparent redirection of user-selected data items. Figure 4 describes the basic method steps of the redirector program 12, and Figure 5 describes the steps of the corresponding program operating at the mobile device 24.

In an alternative embodiment, not explicitly shown in the drawings, the mobile device 24 also includes a redirector program. In this embodiment, user selected data items can be replicated from the host to the mobile device and vice versa. The configuration and operation of the mobile device 24 having a redirector program is similar to that described herein with respect to FIGS. 1-4.

A user can configure the redirector program 12 to push certain user-selected data items to the user's mobile device 24 when the redirector 12 detects that a particular user-defined event trigger (or trigger point) has taken place. User-selected data items preferably include E-mail messages, calendar events, meeting notifications, address entries, journal entries, personal alerts, alarms, warnings, stock quotes, news bulletins, etc., but could, alternatively, include any other type of message that is transmitted to the host system 10, or that the host system 10 acquires through the use of intelligent agents, such as data that is received after the host system 10 initiates a search of a database or a website or a bulletin board. In some instances, only a portion of the data item is transmitted to the mobile device 24 in order to minimize the amount of data transmitted via the wireless network 22. In these instances, the mobile device 24 can optionally send a command message to the host system to receive more or all of the data item if the user desires to receive it.

Among the user-defined event triggers that can be detected by the redirector program 12 are, in the preferred embodiment, external events, internal events and networked events. External events preferably include: (1) receiving a command message (such as message C) from the user's mobile device to begin redirection, or to execute some other command at the host, such as a command to enable the preferred list mode, or to add or subtract a particular sender from the preferred list; (2) receiving a similar message from some external computer, and (3) sensing that the user is no longer in the vicinity of the host system; although, alternatively, an external event can be any other detectable occurrence that is external to the host system. Internal events could be a calendar alarm, screen saver activation, keyboard timeout, programmable timer, or any other user-defined event that is internal to the host system. Networked events are user-defined messages that are transmitted to the host system from another computer coupled to the host system via a network to initiate redirection. These are just some of the events that could be used to initiate replication of the user-selected data items from the host system 10 to the mobile device 24.

Figure 1 shows an E-mail message A being communicated over LAN 14 from computer 26 to the user's desktop system 10 (also shown in Figure 1 is an external message C, which could be an E-mail message from an Internet user, or could be a command message from the user's mobile device 24). Once the message A (or C) reaches the primary message store of the host system 10, it can be detected and acted upon by the redirection software 12. The redirection software 12 can use many methods of detecting new messages. The preferred method of detecting new messages is using Microsoft's® Messaging API (MAPI), in which programs, such as the redirector program 12, register for notifications or 'advise syncs' when changes to a mailbox take place. Other methods of detecting new messages could also be used.

Assuming that the redirector program 12 is activated, and has been configured by the user (either through the sensing of an internal, network or external event) to replicate certain user data items (including messages of type A or C) to the mobile device 24, when the message A is received at the host system 10, the redirector program 12 detects its presence and prepares the message for redirection to the mobile device 24. In preparing the message for redirection, the redirector program 12 could compress the original message A, could compress the message header, or could encrypt the entire message A to create a secure link to the mobile device 24.

Also programmed into the redirector 12 is the address of the user's mobile device 24, the type of device, and whether the device 24 can accept certain types of attachments, such as word processing or voice attachments. If the user's type of mobile device cannot accept these types of attachments, then the redirector 12 can be programmed to route the attachments to a fax or voice number where the user is located using an attached fax or voice machine 30.

The redirector may also be programmed with a preferred list mode that is configured by the user either at the host system 10, or remotely from the user's mobile device by transmitting a command message C. The preferred list contains a list of senders (other users) whose messages are to be redirected or a list of message characteristics that determine whether a message is to be redirected. If activated, the preferred list mode causes the redirector program 12 to operate like a filter, only redirecting certain user data items based on whether the data item was sent from a sender on the preferred list or has certain message characteristics that if present will trigger or suppress redirection of the message. In the example of Figure 1, if desktop system 26 was operated by a user on the preferred list of host system 10, and the preferred list option was activated, then message A would be redirected. If, however, desktop 26 was operated by a user not on the host system's preferred list, then message A would not be redirected, even if the user of the host system had configured the redirector to push messages of type A. The user of the host system 10 can configure the preferred list directly from the desktop system, or, alternatively, the user can then send a command message (such as C) from the mobile device 24 to the desktop system 10 to activate the preferred list mode, or to add or delete certain senders or message characteristics from the preferred list that was previously configured. It should be appreciated that a redirection program could combine message characteristics and preferred sender lists to result in a more finely-tuned filter. Messages marked as low priority or that are simple return receipts or message read receipts, for example, could always be suppressed from redirection while messages from a particular sender would always be redirected.

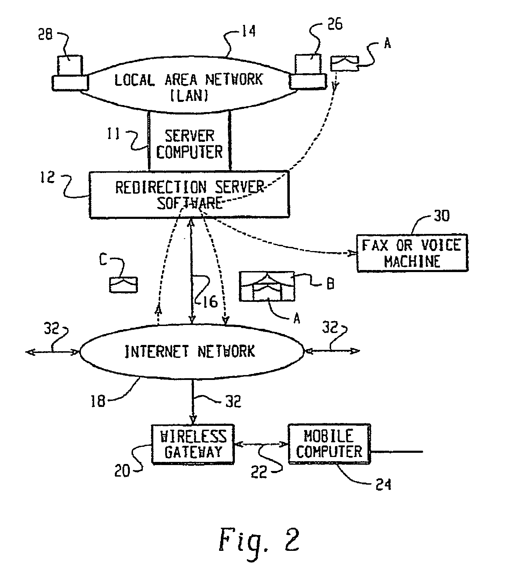

After the redirector has determined that a particular message should be redirected, and it has prepared the message for redirection, the software 12 then sends the message A to a secondary memory store located in the mobile device 24, using whatever means are necessary. In the preferred embodiment this method is to send the message A back over the LAN 14, WAN 18, and through the wireless gateway 20 to the mobile device 24. In doing so, the redirector preferably repackages message A as an E-mail with an outer envelope B that contains the addressing information of the mobile device 24, although alternative repackaging techniques and protocols could be used, such as a TCP/IP repackaging and delivery method (most commonly used in the alternative server configuration shown in Figure 2). The wireless gateway 20 requires this outer envelope information B in order to know where to send the redirected message A. Once the message (A in B) is received by the mobile device 24, the outer envelope B is removed and the original message A is placed in the secondary memory store within the mobile device 24. By repackaging and removing the outer envelope in this manner, the mobile computer 24 appears to be at the same physical location as the host system 10, thus creating a transparent system.

In the case where message C is representative of an external message from a computer on the Internet 18 to the host system 10, and the host 10 has been configured to redirect messages of type C, then in a similar manner to message A, message C would be repackaged with an outer envelope B and transmitted to the user's mobile device 24. In the case where message C is representative of a command message from the user's mobile device 24 to the host system 10, the command message C is not redirected, but is acted upon by the host system 10.

If the redirected user data item is an E-mail message, as described above, the user at the mobile device 24 sees the original subject, sender's address, destination address, carbon copy and blind carbon copy. When the user replies to this message, or when the user authors a new message, the software operating at the mobile device 24 adds a similar outer envelope to the reply message (or the new message) to cause the message to be routed first to the user's host system 10, which then removes the outer envelope and redirects the message to the final destination, such as back to computer 26. In the preferred embodiment this results in the outgoing redirected message from the user's host system 10 being sent using the E-mail address of the host mailbox, rather than the address of the mobile device, so that it appears to the recipient of the message that the message originated from the user's desktop system 10 rather than the mobile device. Any replies to the redirected message will then be sent to the desktop system 10, which if it is still in redirector mode, will repackage the reply and resend it to the user's mobile data device, as described above.

Figure 2 is an alternative system diagram showing the redirection of user data items from a network server 11 to the user's mobile device 24, where the redirector software 12 is operating at the server 11. This configuration is particularly advantageous for use with message servers such as Microsoft's® Exchange Server, which is normally operated so that all user messages are kept in one central location or mailbox store on the server instead of in a store within each user's desktop PC. This configuration has the additional advantage of allowing a single system administrator to configure and keep track of all users having messages redirected. If the system includes encryption keys, these too can be kept at one place for management and update purposes.

In this alternative configuration, server 11 preferably maintains a user profile for each user's desktop system 10, 26, 28, including information such as whether a particular user can have data items redirected, which types of message and information to redirect, what events will trigger redirection, the address of the users' mobile device 24, the type of mobile device, and the user's preferred list, if any. The event triggers are preferably detected at the user's desktop system 10, 26, 28 and can be any of the external, internal or network events listed above. The desktop systems 10, 26, 28 preferably detect these events and then transmit a message to the server computer 11 via LAN 14 to initiate redirection. Although the user data items are preferably stored at the server computer 11 in this embodiment, they could, alternatively, be stored at each user's desktop system 10, 26, 28, which would then transmit them to the server computer 11 after an event has triggered redirection.

As shown in Figure 2, desktop system 26 generates a message A that is transmitted to and stored at the host system 11, which is the network server operating the redirector program 12. The message A is for desktop system 10, but in this embodiment, user messages are stored at the network server 11. When an event occurs at desktop system 10, an event trigger is generated and transmitted to the network server 11, which then determines who the trigger is from, whether that desktop has redirection capabilities, and if so, the server (operating the redirector program) uses the stored configuration information to redirect message A to the mobile computer 24 associated with the user of desktop system 10.

As described above with reference to Figure 1, message C could be either a command message from a user's mobile device 24, or it could be a message from an external computer, such as a computer connected to the Internet 18. If the message C is from an Internet computer to the user's desktop system 10, and the user has redirection capabilities, then the server 11 detects the message C, repackages it using electronic envelope B, and redirects the repackaged message (C in B) to the user's mobile device 24. If the message C is a command message from the user's mobile device 24, then the server 11 simply acts upon the command message.

Turning now to Figure 3, a block diagram showing the interaction of the redirector software 12 with additional components of the host system 10 of Figure 1 (the desktop PC) to enable more fully the pushing of information from the host system 10 to the user's mobile device 24 is set forth. These additional components are illustrative of the type of event-generating systems that can be configured and used with the redirector software 12, and of the type of repackaging systems that can be used to interface with the mobile communication device 24 to make it appear transparent to the user.

The desktop system 10 is connected to LAN 14, and can send and receive data, messages, signals, event triggers, etc., to and from other systems connected to the LAN 14 and to external networks 18, 22, such as the Internet or a wireless data network, which are also coupled to the LAN 14. In addition to the standard hardware, operating system, and application programs associated with a typical microcomputer or workstation, the desktop system 10 includes the redirector program 12, a TCP/IP sub-system 42, an E-mail sub-system 44, a primary data storage device 40, a screen saver sub-system 48, and a keyboard sub-system 46. The TCP/IP and E-mail subsystems 42, 44 are examples of repackaging systems that can be used to achieve transparency, and the screen saver and keyboard sub-systems 46, 48 are examples of event generating systems that can be configured to generate event messages or signals that trigger redirection of the user selected data items.

The method steps carried out by the redirector program 12 are described in more detail in Figure 4. The basic functions of this program are: (1) configure and setup the user-defined event trigger points that will start redirection; (2) configure the types of user data items for redirection and optionally configure a preferred list of senders whose messages are to be redirected; (3) configure the type and capabilities of the user's mobile device; (4) receive messages and signals from the repackaging systems and the event generating systems; and (5) command and control the redirection of the user-selected data items to the mobile device via the repackaging systems. Other functions not specifically enumerated could also be integrated into this program.

The E-Mail sub-system 44 is the preferred link to repackaging the user-selected data items for transmission to the mobile device 24, and preferably uses industry standard mail protocols, such as SMTP, POP, IMAP, MIME and RFC-822, to name but a few. The E-Mail sub-system 44 can receive messages A from external computers on the LAN 14, or can receive messages C from some external network such as the Internet 18 or a wireless data communication network 22, and stores these messages in the primary data store 40. Assuming that the redirector 12 has been triggered to redirect messages of this type, the redirector detects the presence of any new messages and instructs the E-Mail system 44 to repackage the message by placing an outer wrapper B about the original message A (or C), and by providing the addressing information of the mobile device 24 on the outer wrapper B. As noted above, this outer wrapper B is removed by the mobile device 24, and the original message A (or C) is then recovered, thus making the mobile device 24 appear to be the desktop system 10.

In addition, the E-Mail sub-system 44 receives messages back from the mobile device 24 having an outer wrapper with the addressing information of the desktop system 10, and strips this information away so that the message can be routed to the proper sender of the original message A (or C). The E-Mail sub-system also receives command messages C from the mobile device 24 that are directed to the desktop system 10 to trigger redirection or to carry out some other function. The functionality of the E-Mail sub-system 44 is controlled by the redirector program 12.

The TCP/IP sub-system 42 is an alternative repackaging system. It includes all of the functionality of the E-Mail sub-system 44, but instead of repackaging the user-selected data items as standard E-mail messages, this system repackages the data items using special-purpose TCP/IP packaging techniques. This type of special-purpose sub-system is useful in situations where security and improved speed are important to the user. The provision of a special-purpose wrapper that can only be removed by special software on the mobile device 24 provides the added security, and the bypassing of E-mail store and forward systems can improve speed and real-time delivery.

As described previously, the system can be triggered to begin redirection upon detecting numerous external, internal and networked events, or trigger points. Examples of external events include: receiving a command message from the user's mobile device 24 to begin redirection; receiving a similar message from some external computer, sensing that the user is no longer in the vicinity of the host system; or any other event that is external to the host system. Internal events could be a calendar alarm, screen saver activation, keyboard timeout, programmable timer, or any other user-defined event that is internal to the host system. Networked events are user-defined messages that are transmitted to the host system from another computer that is connected to the host system via a network to initiate redirection.

The screen saver and keyboard sub-systems 46, 48 are examples of systems that are capable of generating internal events. Functionally, the redirector program 12 provides the user with the ability to configure the screen saver and keyboard systems so that under certain conditions an event trigger will be generated that can be detected by the redirector 12 to start the redirection process. For example, the screen saver system can be configured so that when the screen saver is activated, after, for example, ten (10) minutes of inactivity on the desktop system, an event trigger is transmitted to the redirector 12, which starts redirecting the previously selected user data items. In a similar manner the keyboard sub-system can be configured to generate event triggers when no key has been depressed for a particular period of time, thus indicating that redirection should commence. These are just two examples of the numerous application programs and hardware systems internal to the host system 10 that can be used to generate internal event triggers.

FIGS. 4 and 5, set forth, respectively, flow charts showing the steps carried out by the redirector software 12 operating at the host system 10, and the steps carried out by the mobile device 24 in order to interface with the host system. Turning first to Figure 4, at step 50, the redirector program 12 is started and initially configured The initial configuration of the redirector 12 includes: (1) defining the event triggers that the user has determined will trigger redirection; (2) selecting the user data items for redirection; (3) selecting the repackaging sub-system, either standard E-Mail, or special-purpose technique; (4) selecting the type of data communication device, indicating whether and what type of attachments the device is capable of receiving and processing, and inputting the address of the mobile device; and (5) configuring the preferred list of user selected senders whose messages are to be redirected.

Figure 4 sets forth the basic steps of the redirector program 12 assuming it is operating at a desktop system 10, such as shown in Figure 1. If the redirector 12 is operating at a network server 11, as shown in Figure 2, then additional configuration steps may be necessary to enable redirection for a particular desktop system 10, 26, 28 connected to the server, including: (1) setting up a profile for the desktop system indicating its address, events that will trigger redirection, and the data items that are to be redirected upon detecting an event; (2) maintaining a storage area at the server for the data items; and (3) storing the type of data communication device to which the desktop system's data items are to be redirected, whether and what type of attachments the device is capable of receiving and processing, and the address of the mobile device.

Once the redirector program is configured 50, the trigger points (or event triggers) are enabled at step 52. The program 12 then waits 56 for messages and signals 54 to begin the redirection process. A message could be an E-Mail message or some other user data item that may have been selected for redirection, and a signal could be a trigger signal, or could be some other type of signal that has not been configured as an event trigger. When a message or signal is detected, the program determines 58 whether it is one of the trigger events that has been configured by the user to signal redirection. If so, then at step 60 a trigger flag is set, indicating that subsequently received user data items (in the form of messages) that have been selected for redirection should be pushed to the user's mobile device 24.

If the message or signal 54 is not a trigger event, the program then determines at steps 62, 68 and 66 whether the message is, respectively, a system alarm 62, an E-Mail message 64, or some other type of information that has been selected for redirection. If the message or signal is none of these three items, then control returns to step 56, where the redirector waits for additional messages 54 to act upon. If, however the message is one of these three types of information, then the program 12 determines, at step 68, whether the trigger flag has been set, indicating that the user wants these items redirected to the mobile device. If the trigger flag is set, then at step 70, the redirector 12 causes the repackaging system (E-Mail or TCP/IP) to add the outer envelope to the user data item, and at step 72 the repackaged data item is then redirected to the user's mobile device 24 via LAN 14, WAN 18, wireless gateway 20 and wireless network 22. Control then returns to step 56 where the program waits for additional messages and signals to act upon. Although not shown explicitly in Figure 4, after step 68, the program could, if operating in the preferred list mode, determine whether the sender of a particular data item is on the preferred list, and if not, then the program would skip over steps 70 and 72 and proceed directly back to step 56. If the sender is on the preferred list, then control would similarly pass to steps 70 and 72 for repackaging and transmission of the message from the preferred list sender.

Figure 5 sets forth the method steps carried out by the user's mobile device 24 in order to interface to the redirector program 12. At step 80 the mobile software is started and the mobile device 24 is configured to operate with the system, including, for example, storing the address of the user's desktop system 10.

At step 82, the mobile device waits for messages and signals 84 to be generated or received. Assuming that the redirector software 12 operating at the user's desktop system 10 is configured to redirect upon receiving a message from the user's mobile device 24, at step 86, the user can decide to generate a command message that will start redirection. If the user does so, then at step 88 the redirection message is composed and sent to the desktop system 10 via the wireless network 22, through the wireless gateway 20, via the Internet 18 to the LAN 14, and is finally routed to the desktop machine 10. In this situation where the mobile device 24 is sending a message directly to the desktop system 10, no outer wrapper is added to the message (such as message C in FIGS. 1 and 2). In addition to the redirection signal, the mobile device 24 could transmit any number of other commands to control the operation of the host system, and in particular the redirector program 12. For example, the mobile 24 could transmit a command to put the host system into the preferred list mode, and then could transmit additional commands to add or subtract certain senders from the preferred list. In this manner, the mobile device 24 can dynamically limit the amount of information being redirected to it by minimizing the number of senders on the preferred list. Other example commands include: (1) a message to change the configuration of the host system to enable the mobile device 24 to receive and process certain attachments; and (2) a message to instruct the host system to redirect an entire data item to the mobile device in the situation where only a portion of a particular data item has been redirected.

Turning back to Figure 5, if the user signal or message is not a direct message to the desktop system 10 to begin redirection (or some other command), then control is passed to step 90, which determines if a message has been received. If a message is received by the mobile, and it is a message from the user's desktop 10, as determined at step 92, then at step 94 a desktop redirection flag is set "on" for this message, and control passes to step 96 where the outer envelope is removed. Following step 96, or in the situation where the message is not from the user's desktop, as determined at step 92, control passes to step 98, which displays the message for the user on the mobile device's display. The mobile unit 24 then returns to step 82 and waits for additional messages or signals.

If the mobile device 24 determines that a message has not been received at step 90, then control passes to step 100, where the mobile determines whether there is a message to send. If not, then the mobile unit returns to step 82 and waits for additional messages or signals. If there is at least one message to send, then at step 102 the mobile determines whether it is a reply message to a message that was received by the mobile unit. If the message to send is a reply message, then at step 108, the mobile determines whether the desktop redirection flag is on for this message. If the redirection flag is not on, then at step 106 the reply message is simply transmitted from the mobile device to the destination address via the wireless network 22. If, however, the redirection flag is on, then at step 110 the reply message is repackaged with the outer envelope having the addressing information of the user's desktop system 10, and the repackaged message is then transmitted to the desktop system 10 at step 106. As described above, the redirector program 12 executing at the desktop system then strips the outer envelope and routes the reply message to the appropriate destination address using the address of the desktop system as the "from" field, so that to the recipient of the redirected message, it appears as though it originated from the user's desktop system rather than the mobile device.

If, at step 102, the mobile determines that the message is not a reply message, but an original message, then control passes to step 104, where the mobile determines if the user is using the redirector software 12 at the desktop system 10, by checking the mobile unit's configuration. If the user is not using the redirector software 12, then the message is simply transmitted to the destination address at step 106. If, however, the mobile determines that the user is using the redirector software 12 at the desktop system 10, then control passes to step 110, where the outer envelope is added to the message. The repackaged original message is then transmitted to the desktop system 10 at step 106, which, as described previously, strips the outer envelope and routes the message to the correct destination. Following transmission of the message at step 106, control of the mobile returns to step 82 and waits for additional messages or signals.

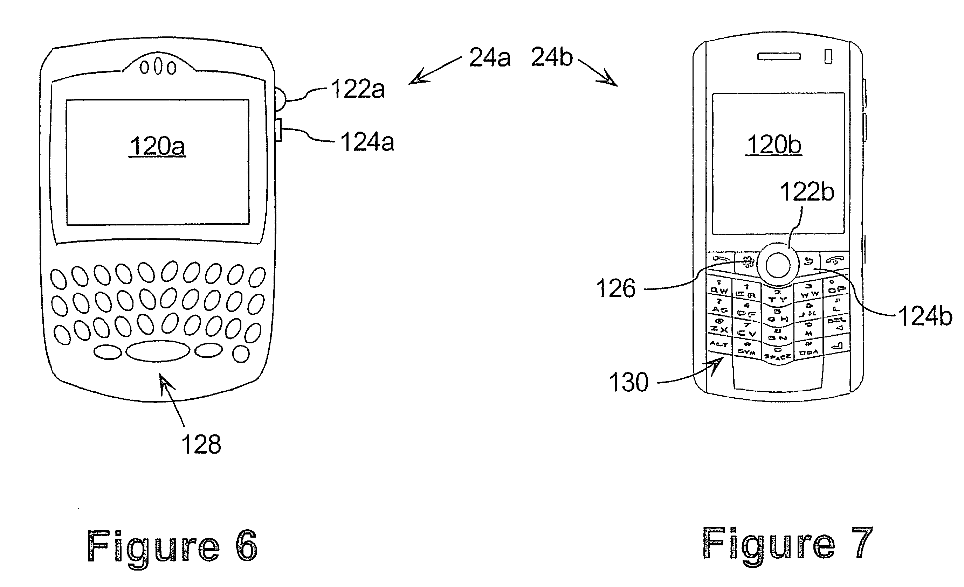

Referring now to Figures 6 and 7, one embodiment of a mobile device 24a is shown in Figure 6, and another embodiment of a mobile device 24b is shown in Figure 7. It will be appreciated that the numeral "24" (as used above) will hereinafter refer to any mobile device 24, including the embodiments 24a and 24b. It will also be appreciated that a similar numbering convention may be used for other general features common between Figures 6 and 7 such as a display 120, a positioning device 122, and a cancel or escape button 124.

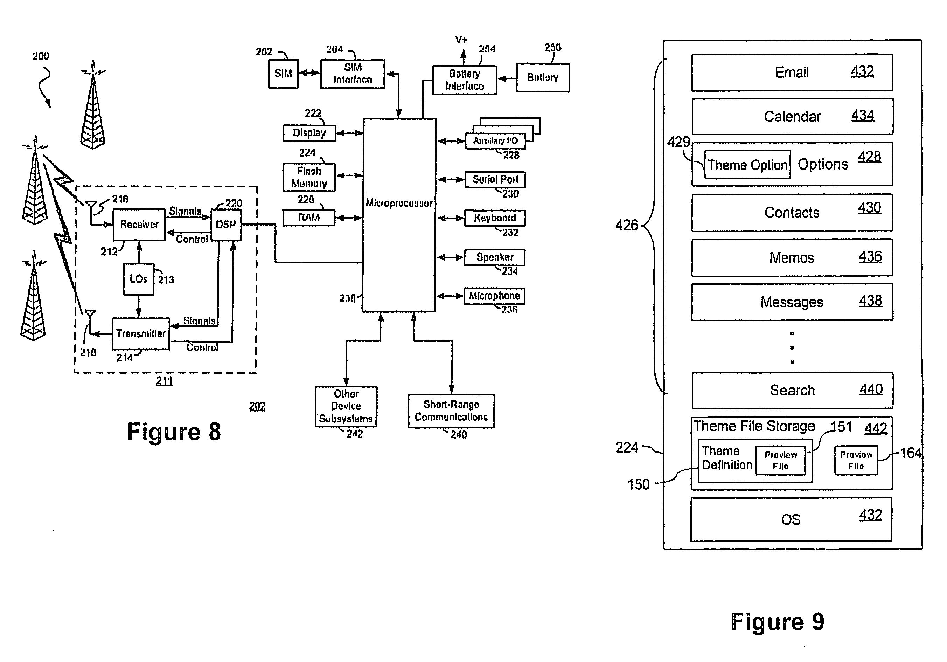

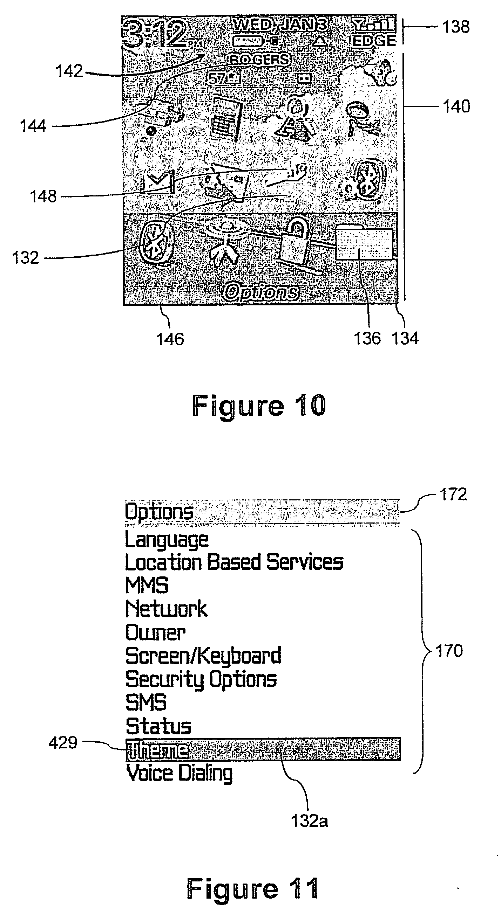

The mobile device 24a shown in Figure 6 comprises a display 120a and the cursor or view positioning device 122 shown in this embodiment is a positioning wheel 122a. Positioning device 122 may serve as another input member and is both rotatable to provide selection inputs to the processor 238 (see Figure 8) and can also be pressed in a direction generally toward housing to provide another selection input to the processor 238. The display 120 may include a selection cursor 132 (see Figure 10) that depicts generally where the next input or selection will be received. The mobile device 24a in Figure 6 also comprises an escape or cancel button 124a and a keyboard 128. In this example, the keyboard 128 is disposed on the front face of the mobile device housing and positioning device 122 and cancel button 124a are disposed at the side of the housing to enable a user to manoeuvre the scroll wheel 122a while holding the mobile device 24 in one hand. The keyboard 128 is in this embodiment a standard QWERTY keyboard.

The mobile device 24b shown in Figure 7 comprises a display 120b and the positioning device 122 in this embodiment is a trackball 122b. Trackball 122b permits multi-directional positioning of the selection cursor 132 such that the selection cursor 132 can be moved in an upward direction, in a downward direction and, if desired and/or permitted, in any diagonal direction. The trackball 122b is preferably situated on the front face of a housing for mobile device 24b as shown in Figure 7 to enable a user to manoeuvre the trackball 122b while holding the mobile device 24b in one hand. The trackball 122b may serve as another input member (in addition to a directional or positioning member) to provide selection inputs to the processor 238 and can preferably be pressed in a direction towards the housing of the mobile device 24b to provide such a selection input.

The mobile device 24b also comprises a menu or option button 126 that loads a menu or list of options on display 120b when pressed, and a cancel or escape button 124b to exit, "go back" or otherwise escape from a feature, option, selection or display. The mobile device 24b as illustrated in Figure 7, comprises a reduced QWERTY keyboard 130. In this embodiment, the keyboard 130, positioning device 122, escape button 124b and menu button 126 are disposed on a front face of a mobile device housing.

The reduced QWERTY keyboard 130 comprises a plurality of multi-functional keys and corresponding indicia including keys associated with alphabetic characters corresponding to a QWERTY array of letters A to Z and an overlaid numeric phone key arrangement. The plurality of keys that comprise alphabetic and/or numeric characters total fewer than twenty-six (26). In the embodiment shown, the number of keys that comprise alphabetic and numeric characters is fourteen (14). In this embodiment, the total number of keys, including other functional keys, is twenty (20). The plurality of keys may comprise four rows and five columns of keys, with the four rows comprising in order a first, second, third and fourth row, and the five columns comprising in order a first, second, third, fourth, and fifth column. The QWERTY array of letters is associated with three of the four rows and the numeric phone key arrangement is associated with each of the four rows.

The numeric phone key arrangement is associated with three of the five columns. Specifically, the numeric phone key arrangement may be associated with the second, third and fourth columns. The numeric phone key arrangement may alternatively be associated with keys in the first, second, third, and fourth rows, with keys in the first row including a number "1" in the second column, a number "2" in the third column, and a number "3" in the fourth column. The numeric phone keys associated with keys in the second row include a number "4" in the second column, a number "5" in the third column, and a number "6" in the fourth column. The numeric phone keys associated with keys in the third row include a number "7" in the second column, a number "8" in the third column, and a number "9" in the fourth column. The numeric phone keys associated with keys in the fourth row may include a "*" in the second column, a number "0" in the third column, and a "#" in the fourth column.

The physical keyboard may also include a function associated with at least one of the plurality of keys. The fourth row of keys may include an "alt" function in the first column, a "next" function in the second column, a "space" function in the third column, a "shift" function in the fourth column, and a "return/enter" function in the fifth column.

The first row of five keys may comprise keys corresponding in order to letters "QW", "ER", "TY", "UI", and "OP". The second row of five keys may comprise keys corresponding in order to letters "AS", "DF", "GH", "JK", and "L". The third row of five keys may comprise keys corresponding in order to letters "ZX", "CV", "BN", and "M".

It will be appreciated that for the mobile device 24, a wide range of one or more positioning or cursor/view positioning mechanisms such as a touch pad, a joystick button, a mouse, a touchscreen, set of arrow keys, a tablet, an accelerometer (for sensing orientation and/or movements of the mobile device 24 etc.), or other whether presently known or unknown may be employed. Similarly, any variation of keyboard 128, 130 may be used. It will also be appreciated that the mobile devices 24 shown in Figures 6 and 7 are for illustrative purposes only and various other mobile devices 24, presently known or unknown are equally applicable to the following examples.

Figure 8 is a detailed block diagram of a preferred mobile station 202 of the present disclosure. The term "mobile station" will herein refer to the operable components of, e.g. mobile device 24. Mobile station 202 is preferably a two-way communication device having at least voice and advanced data communication capabilities, including the capability to communicate with other computer systems. Depending on the functionality provided by mobile station 202, it may be referred to as a data messaging device, a two-way pager, a cellular telephone with data messaging capabilities, a wireless Internet appliance, or a data communication device (with or without telephony capabilities) - e.g. mobile device 24 shown in Figures 6 and 7. Mobile station 202 may communicate with any one of a plurality of fixed transceiver stations 200 within its geographic coverage area.

Mobile station 202 will normally incorporate a communication subsystem 211 which includes a receiver 212, a transmitter 214, and associated components such as one or more (preferably embedded or internal) antenna elements 216 and 218, local oscillators (LOs) 213, and a processing module such as a digital signal processor (DSP) 220. As will be apparent to those skilled in field of communications, particular design of communication subsystem 211 depends on the communication network in which mobile station 202 is intended to operate.

Mobile station 202 may send and receive communication signals over a network after required network registration or activation procedures have been completed. Signals received by antenna 216 through the network are input to receiver 212, which may perform such common receiver functions as signal amplification, frequency down conversion. filtering, channel selection, and like, and in example shown in Figure 8, analog-to-digital (A/D) conversion. A/D conversion of a received signal allows more complex communication functions such as demodulation and decoding to be performed in DSP 220. In a similar manner, signals to be transmitted are processed, including modulation and encoding, for example, by DSP 220. These DSP-processed signals are input to transmitter 214 for digital-to-analog (D/A) conversion, frequency up conversion, filtering, amplification and transmission over communication network via antenna 218. DSP 220 not only processes communication signals, but also provides for receiver and transmitter control. For example, the gains applied to communication signals in receiver 212 and transmitter 214 may be adaptively controlled through automatic gain control algorithms implemented in DSP 220.

Network access is associated with a subscriber or user of mobile station 202.
In one embodiment, mobile station 202 uses a Subscriber Identity Module or "SIM" card 262 to be inserted in a SIM interface 264 in order to operate in the network. SIM 262 is one type of a conventional "smart card" used to identify an end user (or subscriber) of the mobile station 202 and to personalize the device, among other things. Without SIM 262, the mobile station terminal in such an embodiment is not fully operational for communication through a wireless network. By inserting SIM 262 into mobile station 202, an end user can have access to any and all of his/her subscribed services. SIM 262 generally includes a processor and memory for storing information. Since SIM 262 is coupled to a SIM interface 264, it is coupled to microprocessor 238 through communication lines. In order to identify the subscriber, SIM 262 contains some user parameters such as an International Mobile Subscriber Identity (IMSI). An advantage of using SIM 262 is that end users are not necessarily bound by any single physical mobile station. SIM 262 may store additional user information for the mobile station as well, including datebook (or calendar) information and recent call information. It will be appreciated that mobile station 202 may also be used with any other type of network compatible mobile device 24 such as those being code division multiple access (CDMA) enabled and should not be limited to those using and/or having a SIM card 262.

Mobile station 202 is a battery-powered device so it also includes a battery interface 254 for receiving one or more rechargeable batteries 256. Such a battery 256 provides electrical power to most if not all electrical circuitry in mobile station 202, and battery interface 254 provides for a mechanical and electrical connection for it. The battery interface 254 is coupled to a regulator (not shown) which provides a regulated voltage V to all of the circuitry.

Mobile station 202 includes a microprocessor 238 which controls overall operation of mobile station 202. Communication functions, including at least data and voice communications are performed through communication subsystem 211. Microprocessor 238 also interacts with additional device subsystems such as a display 222, a flash memory 224, a random access memory (RAM) 226, auxiliary input/output subsystems 228, a serial port 230, a keyboard 232, a speaker 234, a microphone 236, a short-range communications subsystem 240, and any other device subsystems generally designated at 242. Some of the subsystems shown in Figure 3 perform communication-related functions, whereas other subsystems may provide "resident" or on-device functions. Notably, some subsystems such as keyboard 232 and display 222, for example, may be used for both communication-related functions, such as entering a text message for transmission over a communication network, and device-resident functions such as a calculator or task list. Operating system software used by microprocessor 238 is preferably stored in a persistent store such as flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

Microprocessor 238, in addition to its operating system functions, preferably enables execution of software applications on mobile station 202. A predetermined set of applications which control basic device operations, including at least data and voice communication applications, as well as the inventive functionality of the present disclosure, will normally be installed on mobile station 202 during its manufacture. A preferred application that may be loaded onto mobile station 202 may be a personal information manager (PIM) application having the ability to organize and manage data items relating to user such as, but not limited to, e-mail, calendar events, voice mails, appointments, and task items. Naturally, one or more memory stores are available on mobile station 202 and SIM 262 to facilitate storage of PIM data items and other information.

The PIM application preferably has the ability to send and receive data items via the wireless network. In the present disclosure, PIM data items are seamlessly integrated, synchronized, and updated via the wireless network, with the mobile station user's corresponding data items stored and/or associated with a host computer system thereby creating a mirrored host computer on mobile station 202 with respect to such items. This is especially advantageous where the host computer system is the mobile station user's office computer system. Additional applications may also be loaded onto mobile station 202 through network, an auxiliary subsystem 228, serial port 230, short-range communications subsystem 240, or any other suitable subsystem 242, and installed by a user in RAM 226 or preferably a non-volatile store (not shown) for execution by microprocessor 238. Such flexibility in application installation increases the functionality of mobile station 202 and may provide enhanced on-device functions, communication-related functions, or both. For example, secure communication applications may enable electronic commerce functions and other such financial transactions to be performed using mobile station 202.

In a data communication mode, a received signal such as a text message, an e-mail message, or web page download will be processed by communication subsystem 211 and input to microprocessor 238. Microprocessor 238 will preferably further process the signal for output to display 222 or alternatively to auxiliary I/O device 228. A user of mobile station 202 may also compose data items, such as e-mail messages, for example, using keyboard 232 in conjunction with display 222 and possibly auxiliary I/O device 228. Keyboard 232 is preferably a complete alphanumeric keyboard and/or telephone-type keypad. These composed items may be transmitted over a communication network through communication subsystem 211.

For voice communications, the overall operation of mobile station 202 is substantially similar, except that the received signals would be output to speaker 234 and signals for transmission would be generated by microphone 236. Alternative voice or audio I/O subsystems, such as a voice message recording subsystem, may also be implemented on mobile station 202. Although voice or audio signal output is preferably accomplished primarily through speaker 234, display 222 may also be used to provide an indication of the identity of a calling party, duration of a voice call, or other voice call related information, as some examples.

Serial port 230 in Figure 8 is normally implemented in a personal digital assistant (PDA)-type communication device for which synchronization with a user's desktop computer is a desirable, albeit optional, component. Serial port 230 enables a user to set preferences through an external device or software application and extends the capabilities of mobile station 202 by providing for information or software downloads to mobile station 202 other than through a wireless communication network. The alternate download path may, for example, be used to load an encryption key onto mobile station 202 through a direct and thus reliable and trusted connection to thereby provide secure device communication.

Short-range communications subsystem 240 of Figure 8 is an additional optional component which provides for communication between mobile station 202 and different systems or devices, which need not necessarily be similar devices. For example, subsystem 240 may include an infrared device and associated circuits and components, or a Bluetooth™ communication module to provide for communication with similarly enabled systems and devices. Bluetooth™ is a registered trademark of Bluetooth SIG, Inc.

Turning now to Figure 10, the display 120 of the mobile device 24 displays a home screen 134, which is preferably the active screen when the mobile device 24 is powered up and constitutes the main ribbon application. The home screen 134 generally comprises a status region 138 and a theme background 140, which provides a graphical background for the display 120 as defined by the theme. A series of icons 136 is displayed in a predefined arrangement over the theme background 140.

In some themes, the home screen 134 may limit the number icons 136 shown on the home screen 134 so as to not detract from the theme background 140, particularly where the background 140 is chosen for aesthetic reasons. The theme background 140 shown in Figure 10 provides a grid of icons. In other themes (not shown), a limited list of icons may be displayed in a column (or row) on the home screen along one portion of the display 120. In yet another theme, the entire list of icons may be listed in a continuous row along one side of the home screen on the display 120 enabling the user to scroll through the list while maintaining a limited number of currently visible icons on the display 120. In yet another theme (not shown), metadata may be displayed with each of a limited number of icons shown on the home screen. For example, the next two appointments in the user's calendar may be accessed by the processor 238 and displayed next to the calendar icon. It will be appreciated that preferably several themes are available for the user to select and that any applicable arrangement may be used.

One or more of the series of icons 136 is typically a folder 136 that itself is capable of organizing any number of applications therewithin.

The status region 138 in this embodiment comprises a date/time display 142 and an optional service provider logo 144. The home screen 134, in addition to the theme background 140 and the series of icons 136, also comprises a status bar 146. The status bar 146 provides information to the user based on the location of the selection cursor 132, e.g. by displaying a name for the icon 136 that is currently highlighted.

An application such as an options application 428 (see Figure 9 described below), may then be initiated (opened or viewed) from display 120 by highlighting an options icon 148 using the positioning device 122 and providing a suitable user input to the mobile device 24. For example, options application 428 may be initiated by moving the positioning device 122 such that the options icon 148 is highlighted as shown in Figure 10, and providing a selection input, e.g. by pressing the trackball 122b.

Movement, navigation, and/or scrolling with use of a cursor/view positioning device 122 (e.g. trackball 122b or scroll wheel 122a) is beneficial given the relatively large size of visually displayed information and the compact size of display 120, and since information and messages are typically only partially presented in the limited view of display 120 at any given moment. As previously described, positioning device 122 - scroll wheel 122a and trackball 122b, are helpful cursor/view positioning mechanisms to achieve such movement. Positioning device 122, which may be referred to as a scroll wheel or scroll device 12a in one embodiment (Figure 6), specifically includes a circular disc which is rotatable about a fixed axis of housing and may be rotated by the end user's index finger or thumb.

As noted above, in another embodiment (Figure 7) the trackball 122b comprises a multi-directional member that enables upward, downward and if desired, diagonal movements. The multi-directional movements afforded, in particular, by the trackball 122b and the presentation of the grid of icons 136 and folders 136 provides the user with flexibility and familiarity of the layout of a traditional desktop computer interface. Also, the positioning device 122 enables movement and selection operations to be executed on the mobile device 24 using one hand. The trackball 122b in particular also enables both one-handed use and the ability to cause the cursor 132 to traverse the display 120 in more than one direction.

As shown in Figure 9, memory 224 includes a plurality of applications 426 associated with the series of icons 136 for the processing of data. Applications 426 may be any variety of forms such as, without limitation, software, firmware, and the like. Applications 426 may include, for example, the options application 428, contacts program 430, electronic mail (e-mail) 432, calendar program 434, memo program 436, messages 438, search 440 etc. An operating system (OS) 432 also resides in memory 224. The mobile devices 24 of the present disclosure are also configured to enable communication between different ones of the applications, e.g. between contacts application 430 and the email application 432. Also, the icons 136 for the applications on the devices 24 can be modified, named, moved, sorted and otherwise interacted with for the purposes of organizing and/or manipulating the visibility of the icons for those applications 426.

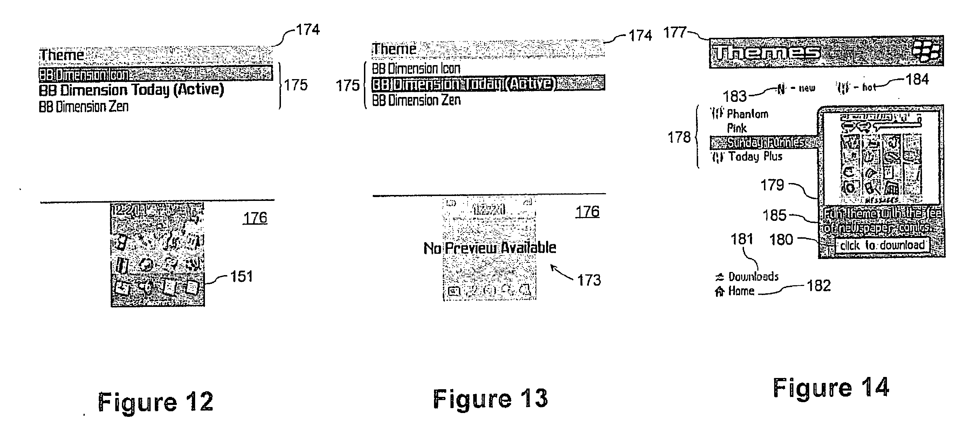

Stored with/in the options application 428 is a theme option 429 that can be selected from a list of options 170 displayed in an options screen 172. The options screen 172 is initiated, loaded and displayed by the processor 238 upon receiving an appropriate input to the mobile device 24, when the move cursor 132 has its focus placed on (or highlights) the options icon 148. The user may select the theme option 429 using an appropriate input mechanism, which then causes the processor 238 to load and display a theme preview and selection screen 174 shown in Figures 12 and 13.

The theme option 429 can be used to instruct the processor 238 to access, load and apply the settings from a theme definition 150 to the UI of mobile device display 120. The theme definitions 150 are stored in memory 224 in a theme file storage 442. Each theme definition 150 comprises, in part, a theme preview file 151 stored therein. The theme preview file 151 may be a thumbnail image of a representative home screen 134 illustrating the look and feel of that particular theme. The image stored in the theme preview file 151 in one embodiment is not an exact snapshot of the home screen 134 but rather a representation of how the home screen 134 would appear based on a predefined "standard" home screen 134 with that theme being activated. Since an exact image of the home screen 134, with the exact icon arrangement etc. may not be readily obtained without actually activating the theme, the representation provided by the image in the theme preview file 151 provides an approximation that enables the user to visualize the look and feel of the theme without actually activating it.

Download theme preview files 164 may also be stored in memory 224, e.g. in the theme file storage 442 as shown in Figure 9. The download theme preview files 164 enable a user to preview themes that are not stored in memory 224 on the mobile device 24 (i.e. cannot be immediately activated), but are available to be downloaded. The number of download theme preview files 164 may be updated dynamically using a theme preview service located, e.g. at the server 156, as will be explained in greater detail below.

Turning now to Figure 10, in order to load or change a theme, the user first highlights the options icon 148 with the move cursor 132 using the positioning device 122. Once an appropriate input from the user is received, e.g. by pressing the trackball 122b, the options screen 172 shown in Figure 11 is then loaded by the processor 238. Once the options screen 172 has been loaded, the user may then move a list cursor 132a using the positioning device 122 to highlight the theme option 429, and by providing an appropriate input, e.g. by again pressing the trackball 122b, the theme preview screen 174 shown in Figures 12 and 13 may then be loaded.

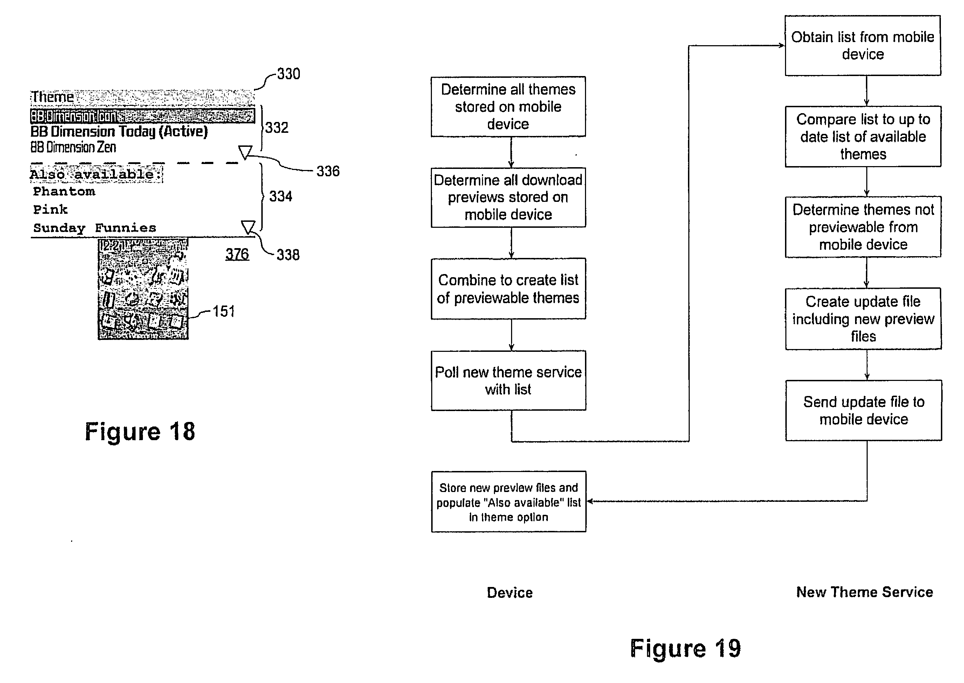

Referring now to Figure 12, the theme preview screen 174 generally comprises a list of themes 175 available to the mobile device 24. The list of themes 175 may include those themes stored in memory 224 on the mobile device 24 and/or themes that are available for download by the mobile device 24. For the mobile device 24 to have access to a list of themes that are not stored but can be downloaded, an update file may obtained and/or received by the mobile device 24 that includes download preview files 164 as will be explained in greater detail below. It will be appreciated that in the embodiment shown in Figure 12, the list of themes 175 identifies those themes stored on the device in memory 224 and which can be activated immediately. As will be explained below, another list of available themes 334 may provided (see Figure 18) to delineate themes that are available for download (and not currently stored but are previewable) from those that are stored and can be activated directly.

The theme preview screen 174 also comprises a theme preview pane 176, which in this example is displayed beneath the list of themes 175. The preview pane 176 displays a thumbnail image loaded from the theme preview file 151 for the particular theme that is highlighted in the list 175. As noted above, the theme preview file 151 is stored with the theme definition 150 in memory 224. As such, the processor 238 can read the selected theme from the list 175, access the associated theme definition 150, extract the theme preview file 151 and display the thumbnail for the preview file 151 in the preview pane 179.

Turning now to Figure 13, where a user chooses to preview an older theme stored on the mobile device 24, whose theme definition 150 does not have theme preview file 151 stored therein, a "No Preview Available" message 173 may be displayed comprising a greyed out image of a standard background, to indicate to the user that a preview does not exist for the selected theme. The message 173 is intended to avoid causing the user to believe that there is a problem with the viewer if a preview cannot be loaded. The message 173 is intended to clearly advise the user that a preview is not available for the selected theme.

It can therefore be seen that the preview pane 176 enables the user to selectively preview several themes (where previews are available) by highlighting different ones of the available themes in the list 175. The preview pane 176 may then be updated by the processor 238 with the appropriate thumbnail image accessed from the appropriate theme preview file 151, which in turn is stored in the appropriate theme definition 150 in memory 224.

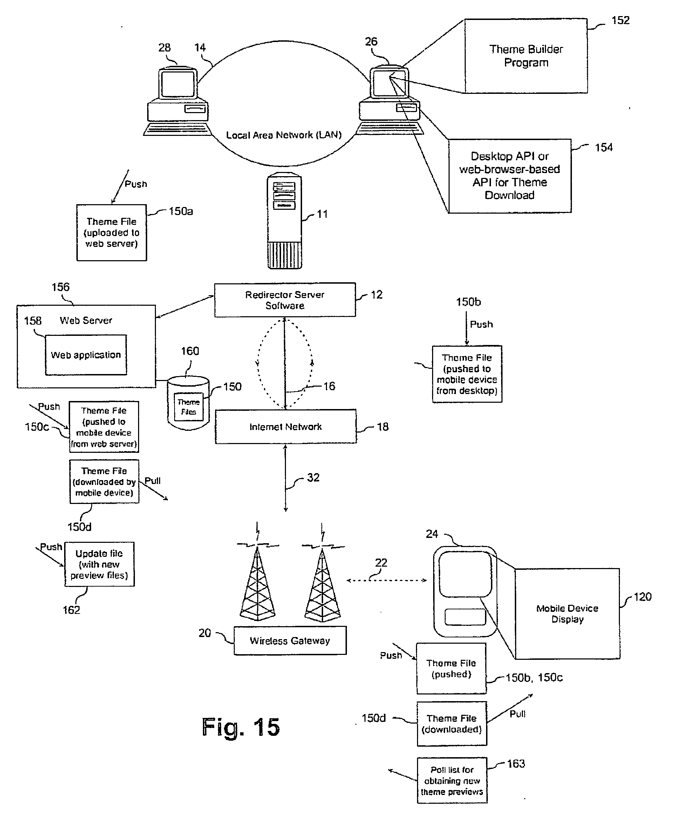

As noted above, the list of themes 175 in this example includes only those themes that are stored on the mobile device 24 in memory 224. The user may wish to obtain new themes that do not appear in the list 175. Turning now to Figure 14, to download a new theme from the mobile device 24 in one embodiment, the user may access a theme download page 177 via a mobile device browser. The theme download page 177 is, in this embodiment, available from a web server 156 provided by the service provider (seen in Figure 15). The web server 156 has a data storage device 160 for storing theme files 150 corresponding to all themes that are currently available.

Figure 15 provides a schematic diagram showing the movement of theme files 150, new theme preview polls 163 and update files 162 with new preview files in a system such as that described above with respect to Figure 1-5. As can be seen in Figure 15, in one embodiment, the web server 156 also provides a web application 158 that supports the download page 177 and a web-browser-based application program interface (API) 154 that can be used to download themes on a desktop computer 26 as will be described in greater detail below.

Turning back to Figure 14, the theme download page 177 comprises a list of themes 178 that are available to be downloaded to the mobile device 24, and a preview pane 179 for previewing a selected or highlighted theme. The preview pane 179 provides an optional theme description 185 and a "click to download" button 180 for selecting the currently previewed theme.

The theme download page 177 also comprises a "Downloads" link 181 for reloading a downloads page (not shown) which may also be accessed via the mobile device browser. Similarly, a "Home" link 182 is also provided to access a home page (also not shown). The theme download page 177 also comprises a legend showing a "New" indicator 183 and a "Hot" indicator 184 for identifying to the user, new and particularly popular themes respectively.

The theme download page 177 is configured to be used in a similar way to the theme preview screen 174 stored in the theme option 429 in memory 224 on the mobile device 24. The theme download page 177 accesses copies of theme preview files 151 from the copies of the theme files 150 stored in the storage device 160. The web application 158 may then access, load and display theme preview files 151 in the preview pane 179, similar to the previews shown in Figures 12 and 13. In this way, the user can preview the themes prior to downloading them.

As can be seen in Figure 15, the mobile device 24 accesses the download page 177 through a connection to the web application 158 hosted by the web server 156. The connection is made through the wireless gateway 20 over connection 22, which in turn communicates with the internet network 18 over connection 32 to access the web server 156. In this embodiment, the web server 156 is provided by, and thus in communication with, the redirector server software 12. It will be appreciated that the web server 156 may take the form of any service or entity that is capable of being accessed by the mobile device 24 and can communicate therewith.

When the user downloads a theme file 150 via the download page 177, a theme file 150d is pulled by the mobile device 24 from the web server 156 through the internet network 18 and the wireless gateway 20. It will be appreciated that in this embodiment, "pulled" refers to communication initiated by the mobile device 24 and that "pushed" refers to communications initiated by an entity other than the mobile device 24.

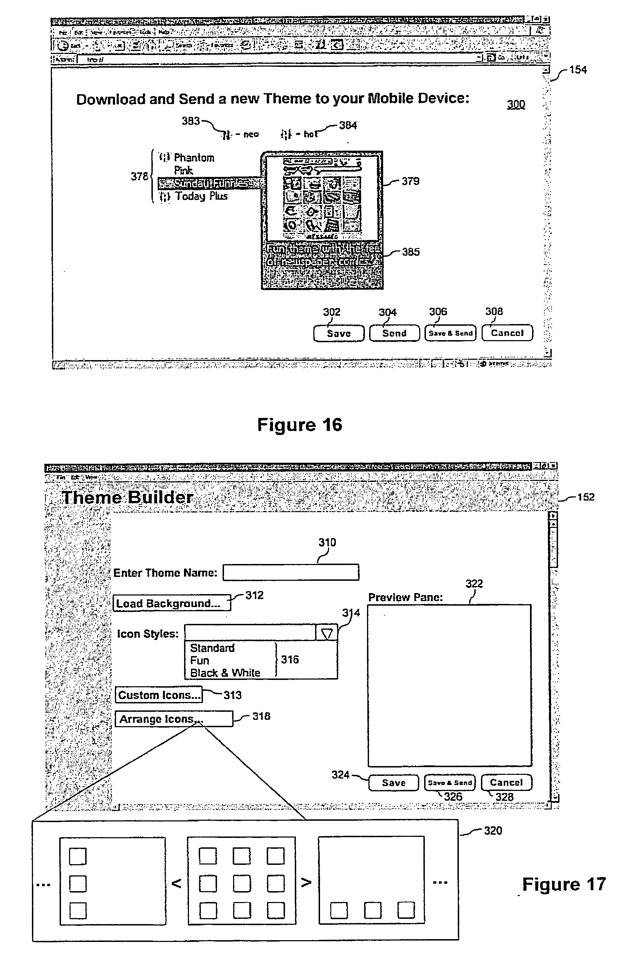

In addition to downloading theme files 150 on the mobile device 24, the user may also preview and download themes and push the downloaded theme files 150b to the mobile device 24 from the desktop computer 26 using the download API 154 shown in Figure 16.

Referring now to Figure 16, the download API 154 displays a download page 300 that is accessed from the web application 158, either via LAN 14 and server 11 where the desktop computer 26 is part of the same entity as the redirector software 12, or through the internet network 18 where the desktop computer 26 is another separate entity at a different location. The download page 300 in this embodiment has the same look and feel as the download page 177 accessed by the user on the mobile device 24 to provide familiarity. The download page 300 comprises a list 378 of downloadable themes, a preview pane 379 for previewing the downloads, and an optional description 385 associated with the selected and previewed theme. When previewing a theme file 150 via the download API 154, the appropriate theme preview file 151 is accessed from the selected theme file 150 stored in storage device 160, and displayed in the preview pane 379 as shown in Figure 16.

The user may select any number of themes in the list 378 in order to preview the theme and, once a desired theme is determined by the user, there are several options. The user may select a "Save" button 302 to save the theme file 150 to their desktop computer 26. The user may wish to save the theme file 150 for any number of reasons such as where an active link with the mobile device 24 is not available at that time or if they are using a desktop computer 26 that is not synchronized with the mobile device 24. In this way, the theme file 150 can be later pushed (shown as theme file 150b in Figure 15) to the mobile device 24 when appropriate.

The user may also wish to send the theme file 150 to the mobile device 24 immediately by selecting a "Send" button 304. The theme file 150c is then pushed to the mobile device 24 by the web server 156 with the appropriate permission (e.g. by payment or account verification etc.). Alternatively, the theme file 150 may be saved and pushed to the mobile device 24 simultaneously by selecting a "Save & Send" button 306. The user may wish to not download any themes after previewing them, in which case a "Cancel" button 308 can be selected to exit or escape the download page 300.

Since themes enable the user to change the look and feel of the UI for the mobile device 24, the user may change themes frequently, particularly where new and popular themes become available for download. In order to offer new themes to the user, the theme builder program 152 may be used create new theme files 150. Although the theme builder program 152 is shown in Figure 15 as being accessed by a user via the desktop computer 26, it will be appreciated that themes may also be created by a service that may or may not be associated with the web server 156 and/or service provider. As such, the theme builder program 152 may be used by any entity with the appropriate relationship. In this embodiment, the theme builder program 152 is part of a development toolkit (not shown) that is used by a developer of a content provider (e.g. theme service) that builds new themes and enables the new themes to be downloaded via the web application 158, pushed to the device, etc..

The theme builder program 152 is shown in Figure 17. In one embodiment, the theme builder program 152 is an API that can be initiated and loaded using a suitable operating system running on the desktop computer 26. The theme builder program 152 has access to various theme components such as icon types, templates etc. that may either be stored locally on the desktop computer 26, available locally via LAN 14 or accessible via any other network such as the Internet network 18 (e.g. by way of a download). Themes may be built with any number of distinguishing features, colours, arrangements etc. Figure 17 exemplifies a few features that may be defined in the theme.

A name for the theme that will appear in the list 175 (or list 178) may be defined by entering a string of characters into a name entry box 310. As noted above, themes typically have different theme backgrounds 140. A "Load Background" button 312 enables the developer to browse for background images, either stored locally or available via a network connection. A theme also comprises a particular arrangement of icons for the UI on the mobile device 24. A list of standard icon choices 316 may be provided using a pull-down list box 314. A "Custom Icons" button 313 may also be used to define each icon representing the applications 426 stored in memory 224 on the mobile device 24. An "Arrange Icons" button 318 may also be provided which may then load and display a series of icon arrangement choices 320. The choices 320 may include a grid arrangement (middle), column arrangement (left), row arrangement (right) or any variation thereof. A standard library of icon arrangement choices 320 is preferably stored in the developer toolkit, however, custom icon arrangement may also be defined, stored and used by the developer. It will be appreciated that other options may also be provided and should not be limited to those shown. It will also be appreciated that the theme builder program 152 may utilize any available development tools, selection options and UI components as necessary and Figure 17 is therefore only representative of one example.

As the developer selects the various options for the theme being built, a preview of the theme may be displayed for the developer in the preview pane 322. The preview pane 322 displays a representative image of the theme that is converted into a thumbnail to be stored as a theme preview file 151 along with the remaining definition for the theme in the theme file 150. It will be appreciated that the preview pane 322 enables the developer to visualize the look and feel of the theme as it would be visualized by the end user when previewed, and ultimately when activated on the mobile device 24.

When the developer has chosen all desired features for the theme, the theme may be saved as a theme file 150 with an embedded theme preview file 151 by selecting a "Save" button 324, which causes a compiler (not shown) for the program 152 to assemble the theme file 150. The newly created theme files 150 may be uploaded to the web server 156 so that they may be made available to the users with a batch synchronization with multiple themes. Theme files 150a may also be uploaded or pushed to the web server 156 individually by the developer from the theme builder program 152 as shown in Figure 15. To upload an individual theme file 150a to the web server 156, the developer may choose a "Save & Send" button 326, which saves the theme file 150 locally, and sends a copy of the theme file 150a to the web server 156 using an appropriate network connection. The theme file 150a sent to the web server 156 is then stored in the storage device 160 and made available to the user by way of the methods discussed above.

As discussed above, the theme option 429 may also provide a list of themes that are available to be downloaded. Another theme preview screen 330 may be displayed by the theme option 429 as shown in Figure 18. The theme preview screen 330 comprises a first list 332 of theme files 150 that are currently stored in memory 224 on the mobile device 24, and a second list 334 of theme files that can be previewed by the user on the mobile device 24 but are not stored in memory 224 and thus need to be downloaded in order to be activated on the mobile device 24. The first and second lists 332, 334 may be delineated as shown or combined into a single list as desired.

By selecting a theme in the second list 334, the processor 238 accesses the appropriate download theme preview file 164 stored in this embodiment in the theme file storage 442 and displays the preview file 164 in the preview pane 376. In this way, the user can preview the theme before downloading it. Where the themes are offered at a cost to the user, this can save the user from wasting money on themes that they do not like, as well as saving storage space. Another benefit of enabling the user to preview downloadable themes in the theme preview screen 330 is that the user does not have to access and load the web browser and download page 177 shown in Figure 14 each time that they wish to preview a theme. In this way, the user can frequently preview new themes and download only those theme files 150 that are actually of interest to them, saving cost (if applicable), time and storage space.

As new theme files 150 are downloaded, the theme preview 164 for that theme is removed from memory 224 and the actual theme file 150 added. The second list 334 is then updated to remove the just downloaded theme, and the first list 332 updated to add the theme, since it is now available for activation on the mobile device 24. As themes are added to either list, the list may grow beyond the display space. Scroll arrows 336 and 338 may then be displayed to indicate to the user that there are more previews available. The user may then use the positioning device 14 to navigate either list.

In order to dynamically update the second list 334 as new theme become available, in one embodiment, a new theme service may be employed. The new theme service may be provided by the web server 156 or third party in communication with the web server 156. In one embodiment, the mobile device 24 prepares a poll list 163 and sends the poll list 163 to the new theme service. The poll list 163 comprises a list of all theme preview files 151 and 164 that are stored in memory 224. Using the poll list 163, the new theme service can check the list 163 against all theme files 150 that are available for download, and create an update file 162 that comprises theme preview files 164 that are available but not already stored in memory 224. In this way, the mobile device 24 does not have to handle duplicates and can better manage the lists 332 and 334.

Referring now to Figure 19, a flow chart illustrating the new theme preview polling process is shown. The mobile device 24 in this embodiment will periodically create the poll list 163, e.g. on a monthly or weekly basis. The polling process is initiated internally and instructs the processor 238 to access the theme file storage 442 to determine all theme preview files 151 (and consequently all theme files 150) that are stored on the mobile device 224. The processor 238 then determines all download preview files 164 that are stored for the second list 334. The processor 238 then combines these results to create an overall list of previewable themes embodied by the poll list 163. The processor 238 then polls the new theme service by pushing the poll list 163 via the wireless gateway 20 as shown in Figure 15.

At the other end, the new theme service obtains the poll list 163, e.g. by accessing poll lists 163 stored in the storage device 160, and then compares the contents of the poll list 163 to an up-to-date master list of all themes that are currently available. The "delta" of these lists is then determined and packaged in an update file 162, which may then be pushed to the mobile device 24 as shown in Figure 15. The mobile device 24 may then receive the update file 162, extract the download theme files 164 and store them in the theme file storage 442 (see Figure 9). The processor 238 may then update the second list 334 to include the newly available theme previews for the user to display and view.

As many new themes are developed, and more and more themes downloaded, the lists 332 and 334 may become inconveniently lengthy. To manage these lists, the theme files 150 and download theme preview files 164 can be deleted by the user from the theme preview screen 330 to discard themes that are undesirable or have never been used. Alternatively, a maximum can be set to manage storage limits, or a custom deletion scheme to discard the oldest or never used themes on a periodic basis. It will be appreciated that there is no need to require that themes or theme files 164 be deleted, however, if storage space is limited and/or if the user wishes to have the list managed, any suitable management scheme may be employed.

It can therefore be seen that by providing the second list 334 of themes that are available for download but not yet stored, the user can preview themes without the need to access the download page 177 or API 154. Moreover, by previewing themes on the mobile device 24, the user can visualize the effect of activating the selected theme without be required to download and activate the theme. In this way, significant time savings can be achieved contributing to the usability of the mobile device 24. By providing a dynamic list of available themes (e.g. second list 334), the user may be exposed to more themes, which may otherwise not be viewed. If the themes are available at a cost, the user can be assured that they have an idea of the look and feel of the theme before committing to purchase, and the new theme service can better market the new themes as they would all be available for previewing by the user in a dynamic way.

The theme preview files 151 and 164, either embedded in theme files 150 or on their own enable the user to preview a representation of a theme before they commit to activating or downloading the theme. By creating a thumbnail image, the previews can be achieved without requiring a snapshot of the actual home screen 134 utilizing the particular theme. Since such a snapshot cannot be taken until the theme is actually activated, the thumbnail provides a way to view a representative view of the theme before having to activate or download the theme. By creating the thumbnail and preview file 151 (or 164) at the time of creating the theme file 150, previewing can be achieved in the many ways discussed above. Since the preview files 151 and 164 are capable of being separated from the theme itself, they can be used to preview a theme without having the full theme definition thus enabling previewing for "yet to be downloaded" or otherwise available themes.

It will be appreciated that the particular options, outcomes, applications, screen shots and icons shown in the figures and described above are for illustrative purposes only and many other variations can be used according to the principles described.

Although the above has been described with reference to certain specific embodiments, various modifications thereof will be apparent to those skilled in the art as outlined in the appended claims.

## Claims

1. A method for previewing a theme for a mobile device (24) comprising:
displaying on a display (120) of said mobile device (24) a first list of themes (332) currently stored on said mobile device and a second list of themes (334) available for download to said mobile device (24), said themes of said second list (334) not currently stored on said mobile device (24); and
upon receiving a first input selecting a desired theme from either said first list (332) or said second list (334), obtaining and displaying an image on said display (120), said image comprising a predefined representation of the appearance of said desired theme.

2. A method according to claim 1 comprising accessing said image from a theme file (150) stored on said mobile device (24).

3. A method according to claim 1 or claim 2 comprising providing access to said second list (334) through a web browser (177, 154).

4. A method according to claim 3 wherein said web browser (177, 154) is accessed through any one of said mobile device (24) and a remote computer (26).

5. A method according to claim 3 or claim 4 comprising pushing a theme file (150) comprising said image to said mobile device (24) from a location independent of the mobile device (24) and configured for communicating with said mobile device (24).

6. A method according to any one of claims 3 to 5 comprising downloading to said mobile device (24), a theme file (150), storing said image and updating said first list (332).

7. A method according to any one of claims 1 to 6 comprising activating said desired theme on said mobile device (24) when said desired theme is selected from said first list (332).

8. A method according to any one of claims 1 to 7 comprising providing a preview pane (176, 179) for displaying said image on said display (120).

9. A method according to any one of claims 1 to 8 wherein images for themes in said second list (334) are stored on said mobile device (24) independent of a corresponding theme file (150) therefor.

10. A method according to any one of claims 1 to 9 comprising enabling said mobile device (24) to download a theme file for said desired theme when said desired theme is in said second list (334).

11. A method according to any one of claims 1 to 10 comprising updating said second list (334) as new themes become available.

12. A method according to claim 11 comprising polling a new theme service with a poll list (163) of themes currently listed in said first list (332) and said second list (334), wherein said new theme service updates said second list (334) according to said poll list (163).

13. A method according to claim 12 comprising said new theme service comparing said poll list (163) with all themes currently available; and, if said poll list (163) does not include at least one of said all themes currently available, said new theme service sending to said mobile device an update file (162) comprising one or more images representative of new themes available to be downloaded.

14. A method according to claim 13 comprising adding said new themes to said second list (334).

15. A computer program product comprising computer readable instructions for causing a computing system to perform the method of any one of claims 1 to 14.

16. A mobile device (24) comprising a display (120), an input mechanism (122, 126, 128, 130) and a processor (238) configured for executing a computer-based application (429) stored on said mobile device (24) for previewing a theme for said mobile device (24), said computer-based application (429) configured to display:
a first list of themes (332) currently stored on said mobile device (24);
a second list of themes (334) available for download by said mobile device (24), said themes of said second list (334) not currently stored on said mobile device (24); and
a preview pane (176, 179) configured for displaying an image for a desired theme upon receiving a first input from said input mechanism (122, 126, 128, 130) selecting a desired theme from either said first list (332) or said second list (334), said image comprising a predefined representation of the appearance of said desired theme.

17. A mobile device according to claim 16 comprising a default image (173) to be displayed when said desired theme does not have a corresponding image.

18. A mobile device according to claim 16 or claim 17 wherein highlighting said desired theme displays said image, and said computer based-application (429) is configured to provide an option for activating said desired theme.

19. A mobile device (24) according to any one of claims 16 to 18 comprising a web browser (177, 154), said computer-based application (429) being configured to access said second list through said web browser (177, 154).

20. A mobile device (24) according to any one of claims 16 to 19 wherein said computer-based application (429) is configured for obtaining a theme file (150) comprising said image from a location independent of said mobile device (24) and storing said image and updating said first list (332).

21. A mobile device (24) according to any one of claims 16 to 20 wherein said computer-based application (429) is configured for activating said desired theme when said desired theme is selected from said first list (332).

22. A mobile device (24) according to any one of claims 16 to 21 wherein said computer-based application (429) is configured for updating said second list (334) as new themes become available.

23. A mobile device (24) according to claim 22 wherein said computer-based application (429) is configured for polling a new theme service with a poll list (163) of themes currently listed in said first list (332) and said second list (334), wherein said new theme service updates said second list (334) according to said poll list (163).

24. A mobile device (24) according to claim 23 wherein said computer-based application (429) is configured for receiving an update file (162) comprising one or more images representative of new themes available to be downloaded, said update file (162) having been generated by said new theme service comparing said poll list (163) with all themes currently available; and, if said poll list (163) does not include at least one of said all themes currently available, adding said new themes available to be downloaded to said update file (162).

## Patentansprüche

1. Ein Verfahren zum Voranzeigen eines Themas für ein mobiles Gerät (24), das umfasst:
das Anzeigen in einer Anzeige (120) des mobilen Geräts (24) einer ersten Liste von Themen (332), die gegenwärtig auf dem mobilen Gerät gespeichert sind, und einer zweiten Liste von Themen (334), die zum Herunterladen auf das mobile Gerät (24) verfügbar sind, wobei die Themen der zweiten Liste (334) nicht gegenwärtig auf dem mobilen Gerät (24) gespeichert sind; und
nach dem Empfangen einer ersten Eingabe zum Auswählen eines gewünschten Themas entweder aus der ersten Liste (332) oder aus der zweiten Liste (334) das Abrufen und Anzeigen eines Bilds in der Anzeige (120), wobei das Bild eine vorgegebene Darstellung des Aussehens des gewünschten Themas umfasst.

2. Ein Verfahren gemäß Anspruch 1, das das Zugreifen auf das Bild aus einer Themendatei (150) umfasst, die auf dem mobilen Gerät (24) gespeichert ist.

3. Ein Verfahren gemäß Anspruch 1 oder Anspruch 2, das das Bereitstellen des Zugriffs auf die zweite Liste (334) über einen Webbrowser (177, 154) umfasst.

4. Ein Verfahren gemäß Anspruch 3, bei dem auf den Webbrowser (177, 154) über das mobile Gerät (24) und/oder einen abgesetzten Computer (26) zugegriffen wird.

5. Ein Verfahren gemäß Anspruch 3 oder Anspruch 4, das das Aussenden einer das Bild umfassenden Themendatei (150) an das mobile Gerät (24) von einem Standort umfasst, der vom mobilen Gerät (24) unabhängig und für das Kommunizieren mit dem mobilen Gerät (24) eingerichtet ist.

6. Ein Verfahren gemäß einem der Ansprüche 3 bis 5, das das Herunterladen einer Themendatei (150) auf das mobile Gerät (24), das Speichern des Bilds und das Aktualisieren der ersten Liste (332) umfasst.

7. Ein Verfahren gemäß einem der Ansprüche 1 bis 6, das das Aktivieren des gewünschten Themas am mobilen Gerät (24) umfasst, wenn das gewünschte Thema aus der ersten Liste (332) ausgewählt wird.

8. Ein Verfahren gemäß einem der Ansprüche 1 bis 7, das das Bereitstellen eines Voranzeigebereichs (176, 179) zum Anzeigen des Bilds in der Anzeige (120) umfasst.

9. Ein Verfahren gemäß einem der Ansprüche 1 bis 8, bei dem Bilder für Themen in der zweiten Liste (334) unabhängig von einer entsprechenden Themendatei (150) hierfür auf dem mobilen Gerät (24) gespeichert werden.

10. Ein Verfahren gemäß einem der Ansprüche 1 bis 9, bei dem das mobile Gerät (24) in der Lage ist, eine Themendatei für das gewünschte Thema herunterzuladen, wenn das gewünschte Thema in der zweiten Liste (334) enthalten ist.

11. Ein Verfahren gemäß einem der Ansprüche 1 bis 10, das das Aktualisieren der zweiten Liste (334) bei Verfügbarwerden neuer Themen umfasst.

12. Ein Verfahren gemäß Anspruch 11, das das Abfragen eines Dienstes für neue Themen mit einer Abfrageliste (163) von gegenwärtig in der ersten Liste (332) und der zweiten Liste (334) aufgeführten Themen umfasst, wobei der Dienst für neue Themen die zweite Liste (334) entsprechend der Abfrageliste (163) aktualisiert.

13. Ein Verfahren gemäß Anspruch 12, das das Vergleichen der Abfrageliste (163) mit allen gegenwärtig verfügbaren Themen durch den Dienst für neue Themen umfasst; wenn hierbei mindestens eines von allen gegenwärtig verfügbaren Themen nicht in der Abfrageliste (163) enthalten ist, sendet der Dienst für neue Themen eine Aktualisierungsdatei (162) an das mobile Gerät, die ein oder mehrere Bilder mit Darstellungen neuer zum Herunterladen verfügbarer Themen umfasst.

14. Ein Verfahren gemäß Anspruch 13, das das Hinzufügen der neuen Themen zur zweiten Liste (334) umfasst.

15. Ein Computerprogrammprodukt, das durch Computer ausführbare Anweisungen enthält, durch die ein Computersystem zum Durchführen des Verfahrens gemäß einem der Ansprüche 1 bis 14 veranlasst wird.

16. Ein mobiles Gerät (24), das eine Anzeige (120), einen Eingabemechanismus (122, 126, 128, 130) und einen Prozessor (238) umfasst und zum Ausführen einer auf dem mobilen Gerät (24) gespeicherten computergestützten Anwendung (429) zum Voranzeigen eines Themas für das mobile Gerät (24) eingerichtet ist, wobei die computergestützte Anwendung (429) zum Anzeigen eingerichtet ist:
einer ersten Liste von Themen (332), die gegenwärtig auf dem mobilen Gerät (24) gespeichert sind;
einer zweiten Liste von Themen (334), die zum Herunterladen durch das mobile Gerät (24) verfügbar sind, wobei die Themen der zweiten Themenliste (334) gegenwärtig nicht auf dem mobilen Gerät (24) gespeichert sind; und
eines Voranzeigebereichs (176, 179), der zum Anzeigen eines Bilds für ein gewünschtes Thema nach dem Empfangen einer ersten Eingabe von dem Eingabemechanismus (122, 126, 128, 130) zum Auswählen eines gewünschten Themas entweder aus der ersten Liste (332) oder aus der zweiten Liste (334) eingerichtet ist, wobei das Bild eine vorgegebene Darstellung des Aussehens des gewünschten Themas umfasst.

17. Ein mobiles Gerät gemäß Anspruch 16, das ein Standardbild (173) umfasst, das anzuzeigen ist, wenn für das gewünschte Thema kein entsprechendes Bild vorliegt.

18. Ein mobiles Gerät gemäß Anspruch 16 oder Anspruch 17, bei dem auf das Markieren des gewünschten Themas hin das Bild angezeigt wird und die computergestützte Anwendung (429) so eingerichtet ist, dass eine Option zum Aktivieren des gewünschten Themas bereitgestellt wird.

19. Ein mobiles Gerät (24) gemäß einem der Ansprüche 16 bis 18, das einen Webbrowser (177, 154) umfasst, wobei die computergestützte Anwendung (429) so eingerichtet ist, dass über den Webbrowser (177, 154) auf die zweite Liste zugegriffen wird.

20. Ein mobiles Gerät (24) gemäß einem der Ansprüche 16 bis 19, bei dem die computergestützte Anwendung (429) so eingerichtet ist, dass eine das Bild umfassende Themendatei (150) von einem Standort, der vom mobilen Gerät (24) unabhängig ist, abgerufen und das Bild gespeichert und die erste Liste (332) aktualisiert wird.

21. Ein mobiles Gerät (24) gemäß einem der Ansprüche 16 bis 20, bei dem die computergestützte Anwendung (429) so eingerichtet ist, dass das gewünschte Thema aktiviert wird, wenn das gewünschte Thema aus der ersten Liste (332) ausgewählt wird.

22. Ein mobiles Gerät (24) gemäß einem der Ansprüche 16 bis 21, bei dem die computergestützte Anwendung (429) so eingerichtet ist, dass die zweite Liste (334) bei Verfügbarwerden neuer Themen aktualisiert wird.

23. Ein mobiles Gerät (24) gemäß Anspruch 22, bei dem die computergestützte Anwendung (429) so eingerichtet ist, dass ein Dienst für neue Themen mit einer Abfrageliste (163) von gegenwärtig in der ersten Liste (332) und der zweiten Liste (334) aufgeführten Themen abgefragt wird, wobei der Dienst für neue Themen die zweite Liste (334) entsprechend der Abfrageliste (163) aktualisiert.

24. Ein mobiles Gerät (24) gemäß Anspruch 23, bei dem die computergestützte Anwendung (429) so eingerichtet ist, dass eine Aktualisierungsdatei (162) empfangen wird, die ein oder mehrere Bilder mit Darstellungen neuer zum Herunterladen verfügbarer Themen umfasst, wobei die Aktualisierungsdatei (162) von dem Dienst für neue Themen durch Vergleichen der Abfrageliste (163) mit allen gegenwärtig verfügbaren Themen erstellt wurde; wenn hierbei mindestens eines von allen gegenwärtig verfügbaren Themen nicht in der Abfrageliste (163) enthalten ist, werden die neuen zum Herunterladen verfügbaren Themen der Aktualisierungsdatei (162) hinzugefügt.

## Revendications

1. Procédé pour prévisualiser un thème pour un dispositif mobile (24) consistant à :
afficher sur un afficheur (120) dudit dispositif mobile (24) une première liste de thèmes (332) actuellement stockée sur ledit dispositif mobile et une deuxième liste de thèmes (334), dont le téléchargement est disponible, vers ledit dispositif mobile (24), lesdits thèmes de ladite deuxième liste (334) n'étant pas stockés actuellement sur ledit dispositif mobile (24) ; et
lors de la réception d'une première entrée, sélectionner un thème souhaité soit dans ladite première liste (332) soit dans ladite deuxième liste (334), obtenir et afficher une image sur ledit afficheur (120), ladite image comprenant une représentation prédéfinie de l'apparence dudit thème souhaité.

2. Procédé conforme à la revendication 1 consistant à accéder à ladite image à partir d'un fichier de thème (150) stocké sur ledit dispositif mobile (24).

3. Procédé conforme à la revendication 1 ou 2 consistant à donner accès à ladite deuxième liste (334) par l'intermédiaire d'un navigateur Web (177, 154).

4. Procédé conforme à la revendication 3 dans lequel l'accès audit navigateur Web (177, 154) se fait par ledit dispositif mobile (24), par un ordinateur distant (26) ou les deux.

5. Procédé conforme à la revendication 3 ou 4 consistant à envoyer en mode « push » un fichier de thème (150) comprenant ladite image audit dispositif mobile (24) à partir d'un emplacement qui est indépendant du dispositif mobile (24) et qui est configuré pour communiquer avec ledit dispositif mobile (24).

6. Procédé conforme à l'une quelconque des revendications 3 à 5 consistant à télécharger vers ledit dispositif mobile (24) un fichier de thème (150), à stocker ladite image et à mettre à jour ladite première liste (332).

7. Procédé conforme à l'une quelconque des revendications 1 à 6 consistant à activer ledit thème souhaité sur ledit dispositif mobile (24) quand ledit thème souhaité est sélectionné dans ladite première liste (332).

8. Procédé conforme à l'une quelconque des revendications 1 à 7 consistant à fournir un volet d'aperçu (176, 179) servant à d'afficher ladite image sur ledit afficheur (120).

9. Procédé conforme à l'une quelconque des revendications 1 à 8 dans lequel les images de thèmes dans la deuxième liste (334) sont stockées sur ledit dispositif mobile (24) indépendamment d'un fichier de thème lui correspondant (150).

10. Procédé conforme à l'une quelconque des revendications 1 à 9 consistant à autoriser ledit dispositif mobile (24) à télécharger un fichier de thème pour ledit thème souhaité quand celui-ci figure dans ladite deuxième liste (334).

11. Procédé conforme à l'une quelconque des revendications 1 à 10 consistant à mettre à jour ladite deuxième liste (334) à mesure que de nouveaux thèmes deviennent disponibles.

12. Procédé conforme à la revendication 11 consistant à consulter un service de nouveaux thèmes avec une liste de consultation (163) de thèmes actuellement répertoriés dans ladite première liste (332) et ladite deuxième liste (334), ledit service de nouveaux thèmes mettant à jour ladite deuxième liste (334) conformément à ladite liste de consultation (163).

13. Procédé conforme à la revendication 12 consistant, d'une part, à faire comparer par ledit service de nouveaux thèmes ladite liste de consultation (163) à tous les thèmes actuellement disponibles, et, d'autre part, si ladite liste de consultation (163) ne comprend pas au moins un de tous lesdits thèmes actuellement disponibles, à faire envoyer audit dispositif mobile, par ledit service de nouveaux thèmes, un fichier de mise à jour (162) comprenant une ou plusieurs image(s) représentative(s) des nouveaux thèmes dont le téléchargement est disponible.

14. Procédé conforme à la revendication 13 consistant à ajouter lesdits nouveaux thèmes à ladite deuxième liste (334).

15. Produit logiciel contenant des instructions lisibles par ordinateur pour faire qu'un système informatique exécute le procédé revendiqué dans l'une quelconque des revendications 1 à 14.

16. Dispositif mobile (24) comportant un afficheur (120), un mécanisme d'entrée (122, 126, 128, 130) et un processeur (238) configuré pour exécuter une application informatique (429) stockée sur ledit dispositif mobile (24) afin de prévisualiser un thème pour ledit dispositif mobile (24), ladite application informatique (429) étant configurée pour afficher :
une première liste de thèmes (332) actuellement stockée sur ledit dispositif mobile (24) ;
une deuxième liste de thèmes (334) dont le téléchargement est disponible par ledit dispositif mobile (24), lesdits thèmes de ladite deuxième liste (334) n'étant pas stockés actuellement sur ledit dispositif mobile (24) ; et
un volet de prévisualisation (176, 179) configuré pour afficher une image d'un thème souhaité lors de la réception d'une première entrée venant dudit mécanisme d'entrée (122, 126, 128, 130), et pour sélectionner un thème souhaité soit dans ladite première liste (332) soit dans ladite deuxième liste (334), ladite image comprenant une représentation prédéfinie de l'apparence dudit thème souhaité.

17. Dispositif mobile conforme à la revendication 16 comprenant une image par défaut (173) à afficher quand ledit thème souhaité n'a pas d'image correspondante.

18. Dispositif mobile conforme à la revendication 16 ou à la revendication 17 dans lequel une mise en surbrillance dudit thème souhaité affiche ladite image, et dans lequel ladite application informatique (429) est configurée pour proposer une option servant à activer ledit thème souhaité.

19. Dispositif mobile (24) conforme à l'une quelconque des revendications 16 à 18 comprenant un navigateur Web (177, 154), ladite application informatique (429) étant configurée pour accéder à ladite deuxième liste par l'intermédiaire dudit navigateur Web (177, 154).

20. Dispositif mobile (24) conforme à l'une quelconque des revendications 16 à 19 dans lequel ladite application informatique (429) est configurée pour obtenir un fichier de thème (150) comprenant ladite image venant d'un emplacement indépendant dudit dispositif mobile (24), et pour stocker ladite image et mettre à jour ladite première liste (332).

21. Dispositif mobile (24) conforme à l'une quelconque des revendications 16 à 20 dans lequel ladite application informatique (429) est configurée pour activer ledit thème souhaité quand ledit thème souhaité est sélectionné dans ladite première liste (332).

22. Dispositif mobile (24) conforme à l'une quelconque des revendications 16 à 21 dans lequel ladite application informatique (429) est configurée pour mettre à jour ladite deuxième liste (334) à mesure que de nouveaux thèmes deviennent disponibles.

23. Dispositif mobile (24) conforme à la revendication 22 dans lequel ladite application informatique (429) est configurée pour consulter un service de nouveaux thèmes avec une liste de consultation (163) de thèmes actuellement répertoriés dans ladite première liste (332) et ladite deuxième liste (334), ledit service de nouveaux thèmes mettant à jour ladite deuxième liste (334) conformément à ladite liste de consultation (163).

24. Dispositif mobile (24) conforme à la revendication 23 dans lequel ladite application informatique (429) est configurée, d'une part, pour recevoir un fichier de mise à jour (162) comprenant une ou plusieurs image(s) représentative(s) des nouveaux thèmes dont le téléchargement est disponible, ledit fichier de mise à jour (162) ayant été généré par une comparaison par ledit service de nouveaux thèmes de la liste de consultation (163) à tous les thèmes actuellement disponibles et, d'autre part, si ladite liste de consultation (163) ne comprend pas au moins un de tous lesdits thèmes actuellement disponibles, pour ajouter audit fichier de mise à jour (162) lesdits nouveaux thèmes dont le téléchargement est disponible.
